# EUROPÄISCHE PATENTSCHRIFT

(11) **EP 1 080 359 B1**
(45) Veröffentlichungstag und Bekanntmachung des Hinweises auf die Patenterteilung: **17.11.2010**
(21) Anmeldenummer: 99923563.3
(22) Anmeldetag: 10.05.1999
(51) Int. Cl.: G01N 1/06, B26D 7/26, B26D 7/22

(54) **MIKROTOM MIT EINEM MESSERHALTER**
MICROTOME WITH KNIFE-HOLDER
MICROTOME AVEC UN PORTE-LAME

(30) Priorität: 29.05.1998 DE 19824024
(43) Veröffentlichungstag der Anmeldung: 07.03.2001
(73) Patentinhaber: Microm International GmbH, 69190 Walldorf (DE)
(72) Erfinder: HEID, Hans, D-69245 Bammental (DE)
(74) Vertreter: Weber, Walter
(86) Internationale Anmeldenummer: PCT/EP1999/003175
(87) Internationale Veröffentlichungsnummer: WO 1999/063322

(56) Entgegenhaltungen:
- EP-A- 0 544 181
- EP-A- 0 833 141
- DE-A- 4 033 335
- DE-C- 3 714 390
- DE-U- 8 910 373
- DE-U- 8 914 782
- DE-U- 29 603 367
- US-A- 1 925 181

## Beschreibung

Mikrotome dienen der Herstellung von Dünnschnitten unterschiedlichster Präparate aus der Medizin, Biologie, Botanik, der Materialforschung und der Qualitätskontrolle von technischen Stoffen, vorwiegend Kunststoffen. Die Herstellung dieser Dünnschnitte erfolgt mit Messern verschiedener Gestalt und Beschaffenheit. Bekannt sind Stahlmesser aus ausgewählten Werkzeugstählen die in verschiedenen Schliffarten hergestellt werden. Neben diesen nachschleifbaren massiven Messern finden sogenannte Einwegklingen eine weite Verbreitung. Dabei unterscheidet man hauptsächlich sogenannte Schmalbandklingen und Breitbandklingen, die nach Überschreitung ihrer Standzeit durch neue ersetzt werden. Außerdem sind Glasmesser und Diamantmesser für spezielle Anwendungen im Gebrauch.

Für alle Messerarten sind in der Mikrotomtechnik eine Vielzahl von Messerträgern und Messerhaltern bekannt, die sich in ihrer Gestaltung zusätzlich dahingehend unterscheiden, für welchen Mikrotomtyp sie vorgesehen sind. Dabei sind hauptsächlich Rotationsmikrotome - bei denen zur Schnittabnahme das Präparat in vertikaler Richtung relativ zu einem feststehenden Messer bewegt wird -, Schlittenmikrotome - bei denen entweder der Messerhalter oder der Präparathalter in horizontaler Richtung zur Schnittabnahme bewegt wird - und Scheibenmikrotome - bei denen das Präparat auf einer relativ zu einem feststehenden Messer rotierenden Scheibe zur Schnittabnahme angeordnet ist - zu unterscheiden. Mikrotome, die in Mikrotomkryostaten eingesetzt werden, entsprechen diesen genannten Typen und unterscheiden sich lediglich durch eine rostfreie Ausführung.

Die eingesetzten Messerträger und Messerhalter erfüllen als Hauptzweck das jeweilige Schneidwerkzeug stabil einzuspannen, um ein Schneideergebnis in Form eines Dünnschnittes von beispielsweise 3 µm zu erzielen. Neben einer stabilen Einspannung, die Vibrationen am Messer verhindert, besitzen die meisten Messerträger und Messerhalter Einrichtungen zur Freiwinkeleinstellung zwischen Messerschneide und Präparat. Weitere Merkmale typischer Messerträger und Messerhalter sind Höhenverstelleinrichtungen für die einzuspannenden Messer, Klemmeinrichtungen zur Fixierung der Messerträger und Messerhalter auf einer Mikrotomgrundplatte oder einem Mikrotomgrundrahmen, sowie bei Messerträgern und Messerhaltern für Kryostatmikrotome sogenannte Schnittstreckeinrichtungen. Messerträger und Messerhalter werden nachfolgend zur Vereinfachung einfach als Messerhalter bezeichnet.

Beim Arbeiten mit Mikrotomen besteht für den Benutzer immer die Gefahr von Schnittverletzungen an der Hand durch das MikrotomMesser. Deshalb sind häufig Fingerschutzeinrichtungen vorgesehen, die in jeder Arbeitspause und bei jeder Vorarbeit beim Einspannen des Präparates in den Präparathalter oder beim Einrichten des Messers in ihre Funktionslage gebracht werden müssen, in der sie die Schneidkante des Messers abdecken. Bei einigen bekannten Messerhaltern ist dazu der Fingerschutz verschwenkbar am Messerhalter angeordnet. Andere Fingerschutzeinrichtungen sind nicht mit dem Messerhalter verbunden und können frei auf das Messer aufgesetzt werden. Häufig werden sie dabei über schwache Magnete in ihrer Position gehalten oder über Stifte positioniert. Wieder andere Fingerschutzeinrichtungen bestehen aus seitwärts verschiebbaren Stangen oder Schutzblechen, die so verschoben werden können, daß sie in Arbeitspausen den mittleren Schneidebereich der Messerschneide abdecken. Die genannten Fingerschutzeinrichtungen haben alle den Nachteil, daß sie während des Arbeitens, also während Schnittfolgen am Mikrotom stattfinden, keinerlei Schutz bieten. Entsprechende Fingerschutzeinrichtungen sind beispielsweise in der US 5,099,735 und in der GB 2 238 973 beschrieben.

In der US 4,378,718 ist ein Messerhalter mit relativ zum Messer feststehenden Abdeckelementen für die Schneidkante des Messers beschrieben; die Abdeckelemente decken die Klinge jedoch nur Unvollständig ab. In der US 5,050,470 ist ein Messerhalter mit einem Schnittstrecker beschrieben, der die Klinge ebenfalls nur teilweise abdeckt.

Aus der DE 37 14 390 Cl ist ein Fingerschutz für ein Schlittenmikrotom beschrieben, bei dem sich ein plattenartig ausgebildeter Klingenschutz von der waagerechten Schnittebene im wesentlichen senkrecht nach oben erstreckt und in der Arbeitsposition, also beim Schneiden, schildartig vor dem Messer über das zu scheidende Präparat bewegt wird. Dieser Fingerschutz schützt zwar während des Schneidens, muß jedoch für jedes Abnehmen eines Schnitts vom Messerrücken weggeschoben oder weggeschwenkt werden, damit er bei der Schnittabnahme nicht im Weg ist. Dadurch ist das Arbeiten mit diesem Fingerschutz umständlich und er wird deshalb oft gar nicht erst in seine Arbeitsposition geschwenkt oder geschoben. Auch bei der Schnittabnahme kann der Fingerschutz nicht wirksam sein, da er wegbewegt sein muß.

In der US 1,925,181 und in der US 5,161,446 sind jeweils Mikrotome mit Messerhaltern beschrieben, bei denen die oben genannten Nachteile vermieden werden. Die dort beschriebenen Fingerschutzeinrichtungen weisen jeweils eine Abdeckplatte für die Messerschneide auf, die präparatseitig des Messers verschwenkbar am Grundkörper des Messerhalters angeordnet ist. Bei einer Annäherung zwischen Präparathalter und Messer wird diese Abdeckplatte über eine Mitnahmenocke aus ihrer Funktionsstellung, in der sie die Schneidkante des Messers abdeckt, verschwenkt und gibt somit erst unmittelbar vor der Schnittabnahme die Schneidkante des Messers frei. Die Schneidkante des Messers bleibt jedoch nach erfolgter Schnittabnahme freigegeben, bis sich der Präparathalter wieder soweit vom Messer entfernt hat, dass kein Kontakt zwischen der Mitnahmenocke und dem Präparathalter mehr besteht. In dieser Phase des Schneidvorganges können deshalb auch diese Schutzeinrichtungen keinen wirksamen Schutz vor Schnittverletzungen bieten. Beim Schneiden von Präparaten mit relativ kurzen Abmessungen in Richtung der Schneidkante des Messers besteht außerdem die Möglichkeit bei schon freiliegender Schneide mit einem Finger versehentlich zwischen Präparat und Messerschneide zu gelangen und damit eine Verletzung zu erleiden.

Es ist deshalb das Ziel der Erfindung, ein Mikrotom mit einem Messerhalter mit einem Schutz gegen Schnittverletzungen zu schaffen, der auch während der Ausführung der Schneidearbeiten und der Schnittabnahme wirksam ist. Dieses Ziel wird durch ein Mikrotom mit den Merkmalen des Anspruches 1 gelöst. Vorteilhafte Ausgestaltungen der Erfindung ergeben sich aus den Merkmalen der abhängigen Ansprüche.

Der erfindungsgemäße Mikrotom mit einem Messerhatter weist einen als Platte ausgebildeten Klingenschutz auf. Die Platte ist dabei auf der der Probenseite abgewandten Seite beabstandet, von der

Schneideebene des in den Messerhalter aufzunehmenden Messers oder der in den Messerhalter aufzunehmenden Klingen auf der Seite der Schneidekante beabstandet vom Messerhalter angeordnet. Bei einer derartigen Ausbildung des Klingenschutzes braucht dieser zur Schnittabnahme nicht entfernt zu werden. Er ist deshalb auch während der Schnittabnahme voll wirksam und kann sich über die gesamte Länge des Messers oder über die gesamte zur Schnittabnahme üblicherweise frei liegende Länge des Messers bzw. der Klinge erstrecken.

Die Platte ist parallel zur Schnittebene beabstandet zur Messerfläche angeordnet. Der Abstand zwischen der Schneideebene und der Platte wird dabei vorzugsweise so groß gewählt, wie die maximale am Mikrotom einstellbare Schnittdicke ist. Maximal sollte der Abstand jedoch 2 mm betragen.

Für eine gute Beobachtbarkeit der Schnitterzeugung und eine Beurteilung der abgenommenen Schnitte besteht die Platte vorzugsweise aus einem transparenten Material, beispielsweise PMMA.

Bei einem Schneidehub bewegt sich das Präparat mit dem Präparathalter relativ zur Messerschneide und dem Messerhalter. Die Freiräume und Abstände zwischen der Platte und dem sich relativ dazu bewegenden Präparat sowie zwischen der Platte und der Messerschneide sollten so bemessen sein, daß kein Glied eines Fingers zwischen die sich bewegenden Teile gelangen kann.

In den meisten Fällen ist ein Spalt zwischen der Messerschneide und der Platte nicht vermeidbar, damit der für eine erfolgreiche Schnitterzeugung und Schnittabnahme notwendige Freiraum gewährleistet ist. Die Breite dieses Spaltes sollte jedoch maximal 2,5 mm betragen.

Bei einem vorteilhaften Ausführungsbeispiel der Erfindung ist die Platte verschwenkbar oder verschiebbar am Grundkörper des Messerhalters angeordnet. Dadurch wird gewährleistet, daß der Klingenschutz aus seiner Funktionslage in eine Stellung gebracht werden kann, in der der für Einrichtarbeiten am Präparat erforderliche freie Zugang zum Präparat gewährleistet ist. Damit auch in dieser Position ein Fingerschutz gewährleistet ist, sollte zusätzlich ein bekannter Fingerschutz, der während der Schneidearbeiten von der Schneidkante entfernt wird, vorgesehen sein.

Bei einer weiterhin vorteilhaften Ausführungsform der Erfindung ist der Verschwenk- oder Verschiebemechanismus der Platte mit einem Schalter oder Mikroschalter gekoppelt. Dieser Schalter kann dann wiederum elektrisch mit einer Bremse oder Arretiervorrichtung für den Messerschlitten oder den Präparatschlitten des Mikrotoms derart gekoppelt sein, daß eine Bewegung des Messerschlittens oder des Präparatschlittens ausgeschlossen ist, wenn die Platte aus ihrer die Schneidkante des Messers abdeckenden Funktionsstellung verschwenkt bzw. verschoben ist. Hierdurch wird ein unbeabsichtigtes Verfahren des Messerschlittens bei Einrichtarbeiten am Mikrotom vermieden.

Die Kopplung eines mit einem verschwenk- oder verschiebbaren Klingenschutz gekoppelten Schalters mit einer Bremse oder einem motorischen Schneideantrieb ist aber auch mit anders ausgebildeten Klingenschutzeinrichtungen nützlich und stellt eine separate Erfindung dar.

Bei Mikrotomen, die ohnehin bereits einen motorischen Schneideantrieb haben, kann der Schalter im Stromkreis des Motors für den Schneideantrieb angeordnet sein. Der Lastkreis des Antriebmotors wird dann so geschaltet, daß ein Betrieb des Antriebmotors nur dann möglich ist, wenn sich die Platte in der die Messerschneide des Messers abdeckenden Funktionsstellung befindet. Dadurch wird sichergestellt, daß eine Fehlbedienung an dem Bedienelement, beispielsweise einem Fußschalter, für den motorischen Schneideantrieb nicht zu einem unbeabsichtigten Einschalten des Schneideantriebes führt und dadurch eine Unfallgefahr verursacht. Mögliche Defekte an Bedienelementen oder elektrischen oder elektronischen Bauteilen können ebenfalls zu einer vergleichbaren Unfallgefahr führen, da im Falle entsprechender Fehler der Schneideantrieb unkontrolliert einschalten kann. Störbeeinflussungen von außen können dabei eine ähnliche Wirkung erzielen. Die durch solche Fehler und Störungen verursachten Risiken können daher durch den erfindungsgemäßen Messerhalter deutlich reduziert werden.

Nachfolgend werden Einzelheiten der Erfindung anhand der in den Figuren dargestellten Ausführungsbeispiele näher erläutert.

Im einzelnen zeigen:
- Figur 1: eine perspektivische Ansicht eines Mikrotoms mit einem Messerhalters nach der Erfindung;
- Figur 2: eine vereinfachte Schnittdarstellung im Bereich des Messerhalters in Figur 1;
- Figuren 3a und 3b: Prinzipskizzen eines erfindungsgemäßen Messerhalters mit verschwenkbarem (Figur 3a) bzw. verschiebbarem (Figur 3b) Klingenschutz;
- Figur 4: einen Schnitt durch die Lagerung eines Verschwenk- mechanismus für den erfindungsgemäßen Klingenschutz;
- Figur 5: den Schnitt durch ein Schlittenmikrotom mit einem erfindungsgemäßen Messerhalter;
- Figuren 6a-6c: Schaltkreise bezüglich der Einbindung des mit dem Verschwenkmechanismus gekoppelten Schalters in den Schaltkreis einer Arretierung für den Mikrotom- schlitten bzw. eines motorischen Antriebes für den Mikrotomschlitten;
- Figur 7a: eine perspektivische Ansicht eines Scheibenmikrotoms mit einem erfindungsgemäßen Messerhalter; und
- Figur 7b: eine Schnittdarstellung des Scheibenmikrotoms aus Figur 7a.

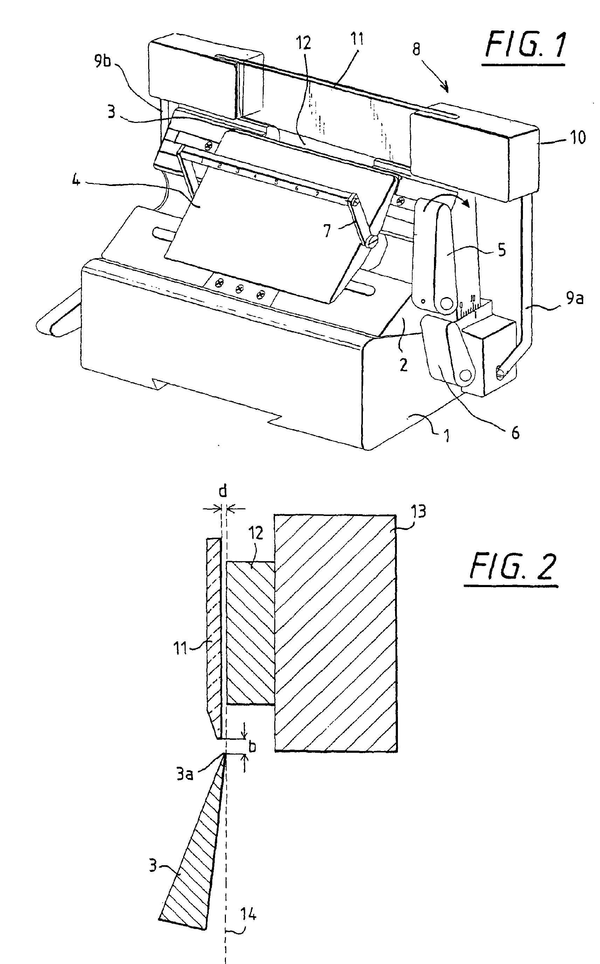

Das Mikrotom in Figur 1 hat einen im wesentlichen konventionellen Aufbau aus einem am Mikrotomgrundteil aufnehmbaren Grundkörper (1), an dem zur Freiwinkeleinstellung ein Aufnahmekörper (2) für das Schneidmesser (3) um die Schneidekante des Schneidmessers (3) verdrehbar aufgenommen ist. Der jeweils eingestellte Freiwinkel ist über einen hier nicht dargestellten Klemm-Mechanismus, der mittels eines Hebels (6) bedienbar ist, fest eingestellt. Zum Festklemmen des Messers (3) ist eine Klemmplatte (4) vorgesehen, mit der über einen weiteren mittels eines Hebels (5) bedienbaren Klemm-Mechanismus in bekannter Weise das Messer (3) zwischen dem Aufnahmekörper (2) und der Klemmplatte (4) festgeklemmt wird.

Der Grundkörper (2) weist auf der dem Präparat zugewandten Seite im mittleren Bereich eine Ausnehmung auf, in der das zu schneidende Präparat mit der Schneidekante des Messers (3) in Kontakt treten kann und das Präparat zur Schnittabnahme über das Messer (3) geführt werden kann. Gerade in dem Bereich dieser Ausnehmung des Aufnahmekörpers (2) ist üblicherweise das Messer frei zugänglich, wodurch für den Bedienenden es sehr leicht zu Schnittverletzung kommen kann. Um das Risiko derartiger Schnittverletzungen zu reduzieren, ist an der Klemmplatte (4) ein verschwenkbarer Bügel (7) angeordnet, der bei Montier- und Einrichtarbeiten am Mikrotom oder am Präparat so verschwenkt werden kann, daß der Bügel die Schneidkante des Messers (3) abdeckt. Dieser Schutzbügel (7) muß jedoch nach Abschluß der Einrichtarbeiten und vor Aufnahme der Schnittabnahme wieder in eine Stellung verschwenkt werden, in der das Messer (3) für das Präparat zugänglich ist, da anderenfalls keine Schnittabnahme erfolgen könnte.

Insoweit wie gerade beschrieben entspricht das Mikrotom Figur 1 einem konventionellen Mikrotom. Gemäß der vorliegenden Erfindung ist am Grundkörper (1) des Messerhalters ein weiterer Klingenschutz vorgesehen. Dieser Klingenschutz besteht aus zwei an den beiden Stirnseiten des Grundkörpers (1) verschwenkbar angeordneten Armen (9a, 9b), die jeweils einen Haltebacken (10) und eine die Haltebacken (10) verbindende Platte (11) aus einem transparenten Material aufweisen. Die Platte (11) besteht vorzugsweise aus PMMA. Die Platte (11) zusammen mit den beiden Haltebacken (10) erstreckt sich über die gesamte Länge (in Richtung der Schneidkante des aufzunehmenden Messers) des Messerhalters.

Wie einer Zusammenschau mit der Figur 2 entnehmbar ist, ist die Platte (11) parallel zur Schneideebene (14) auf der zum Probenhalter (13) mit darin aufgenommener Probe (12) abgewandten Seite des Messerträgers und gleichzeitig auf der Seite der Schneidekante (3a) des Messers beabstandet vom Messerhalter angeordnet. Die Platte (11) steht damit der Schneidekante des Messers gegenüber. Durch diese Anordnung der Platte (11) ist gewährleistet, daß auch bei in Funktionsstellung befindlicher Platte (11), in der die Platte einen unbeabsichtigten Zugriff auf die Messerschneide (3a) verhindert, eine Schnittabnahme erfolgen kann. Dazu ist die Platte (11) um einen Spalt (d) von der Schneideebene (14) beabstandet. Die Breite des Spaltes (d) entspricht dabei der maximal am Mikrotom einstellbaren Schnittdicke. In Schneiderichtung ist zwischen der Schneidkante (3a) des Messers und dem dem Messer zugewandten Rand der Platte (11) ein kleiner Spalt (b) vorgesehen, dessen maximale Breite so gewählt ist, daß kein Fingerglied eines Menschen mit der Schneidkante (3a) des Messers in Berührung kommen kann. Die Breite des Spaltes (b) beträgt dazu maximal 2,5 mm. Diese Spaltbreite reicht gleichzeitig aus, daß der von der Probe (12) abgenommene Schnitt zwischen der Platte (11) und der Rückenfläche des Messers (3) durch diesen Spalt hindurchgleiten kann und auf der frei zugänglichen Rückenfläche des Messers (3) liegen bleibt.

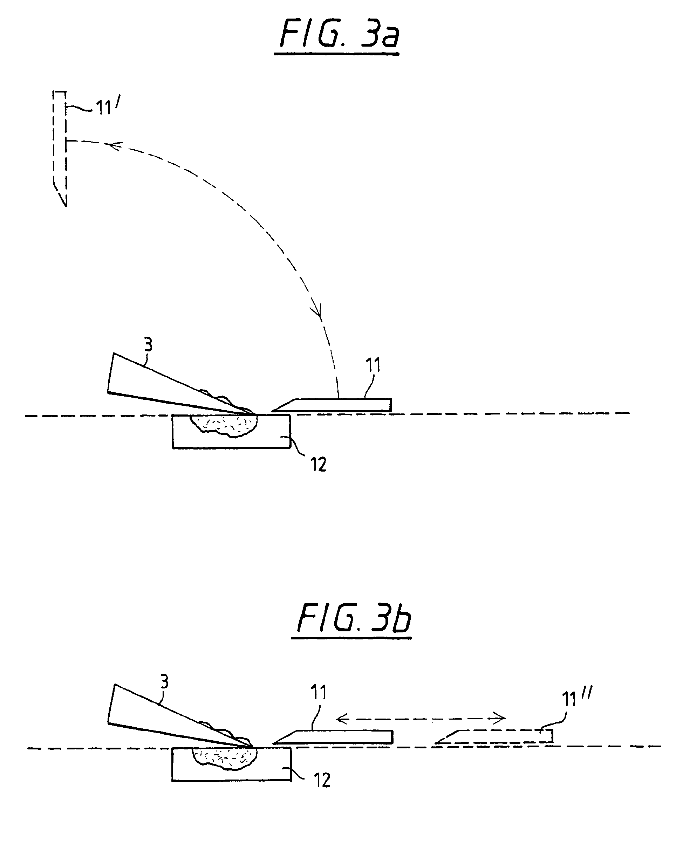

Bei dem Ausführungsbeispiel nach der Figur 1 kann die Platte (11) und damit der gesamte Klingenschutz durch Verschwenken um die Schwenkachse der Arme (9a, 9b) aus seiner Funktionsstellung in eine Einrichtstellung verschwenkt werden, in der das Präparat für Einrichtarbeiten frei zugänglich ist. Diese Verschwenkbarkeit der Platte (11) ist in der Figur 3a schematisch dargestellt, wobei die Platte (11) in der Einrichtstellung mit (11') bezeichnet ist.

Bei dem in der Figur 3b schematisch angedeuteten Ausführungsbeispiel kann die Platte (11) durch eine lineare Verschiebung aus ihrer Funktionsstellung in eine Einrichtstellung (11") verschoben werden, in der ein freier Zugang auf das Präparat (12) gewährleistet ist.

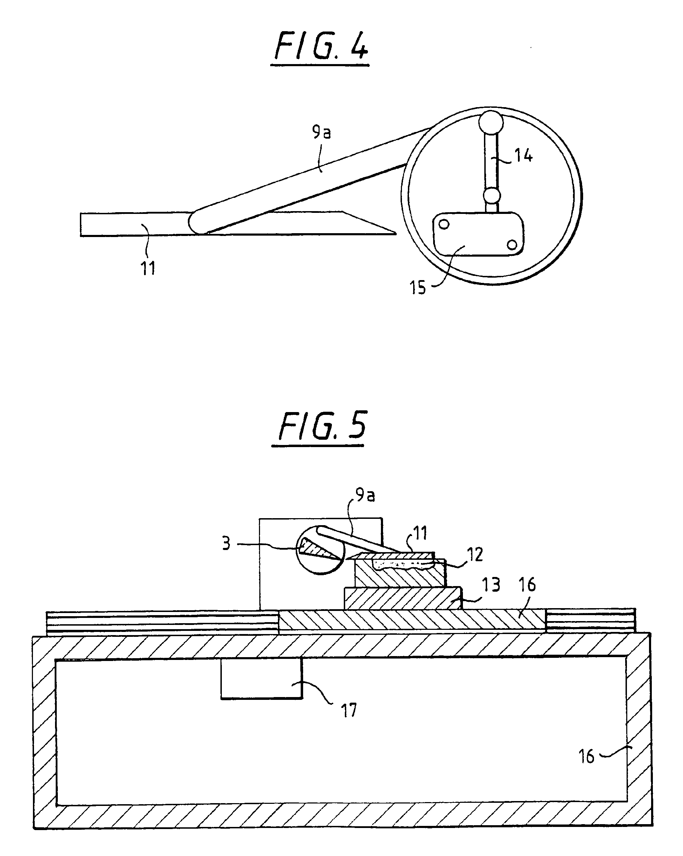

In der Figur 4 ist der Schnitt durch die Schwenklagerung des Armes (9a) dargestellt. Über einen Betätigungsarm (14) ist die Schwenkbewegung des Armes (9a) mit einem Schalter, vorzugsweise einem Mikroschalter (15) verbunden. Der Mikroschalter (15) ist dabei als Schließer ausgebildet, d.h. der Schalter (15) ist nur dann geschlossen, wenn der Arm (9a) in der durch die Funktionsstellung der Platte (11) definierten Schwenklage sich befindet.

Bei dem in Figur 5 dargestellten Schlittenmikrotom ist der Präparathalter (13) mit dem daran aufgenommenen Präparat (12) auf einem Schlitten (16) relativ zum Messerhalter mit daran aufgenommenem Messer (3) horizontal linear verschiebbar. Im Mikrotomgrundkörper ist eine elektromagnetische betätigbare Bremseinrichtung (17) angeordnet, durch die der Schlitten (16) in seiner jeweiligen Position arretiert werden kann. Diese Bremse (17) ist mit dem Schalter (15) im Schwenkgelenk der Platte (11) des Messerhalters elektrisch verbunden derart, daß die Bremse (17) den Schlitten (16) nur dann frei gibt, wenn die Platte (11) in ihre die Schneidkante des Messers (3) abdeckende Funktionsstellung geschwenkt ist. In allen anderen Fällen ist eine Bewegung des Schlittens (16) durch die Bremse (17) blockiert, so daß ein unbeabsichtigtes Verschieben des Schlittens (16) bei Einrichtarbeiten am Präparat (12) oder am Messer (3) vermieden ist.

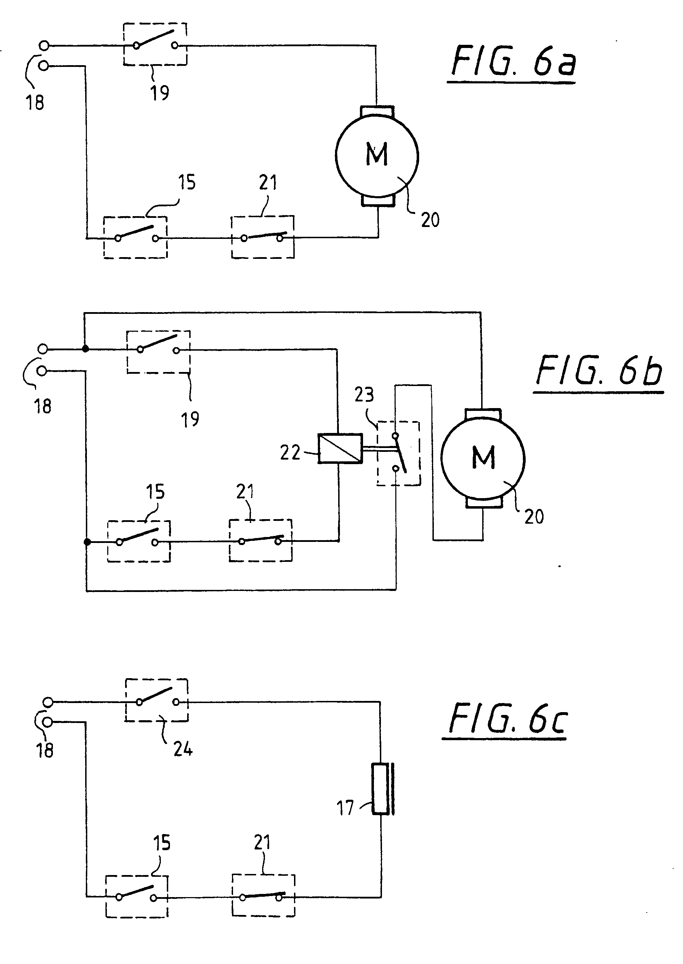

Der in der Figur 5 nicht dargestellte Schaltkreis, über den der Schalter (15) am Messerhalter mit der Bremse (17) verbunden ist, ist in der Figur 6c dargestellt. Der Schalter (15) ist dazu seriell zum Elektromagnet, der die mechanische Antriebsbremse öffnet, im Stromkreis einer Spannungsquelle (18) geschaltet. Weiterhin kann ein weiterer Schalter (24) an der Bedienkonsole des Mikrotoms und ein Notstopschalter (21), der als Öffner ausgeführt ist, seriell zum Elektromagneten (17), der die Antriebsbremse öffnet, vorgesehen sein. Das Öffnen eines der Schalter (15, 21, 24) bewirkt ein sofortiges Arretieren des Schlittens (16). Durch die serielle Schaltung mit den weiteren Schaltern (21, 24) kann die Arretierung des Schlittens (16) auch in den Fällen bewirkt werden, in denen der Klingenschutz in seiner Funktionsstellung ist.

In der Figur 6a ist der Schaltkreis für den Motorstrom eines motorischen Schneideantriebes dargestellt. Auch in diesem Schaltkreis ist der Schalter (15) im Schwenkgelenk des Klingenschutzes seriell im Versorgungsstromkreis des Motors (20) angeordnet. Hier können im Schaltkreis weiterhin seriell ein Schalter (19) zum Einschalten des Antriebmotors, der vorzugsweise als Schließer ausgebildet ist, und wiederum ein Notstopschalter (21) vorgesehen sein.

Beim Ausführungsbeispiel nach Figur 6b liegt der Schalter (15) zusammen mit dem Startschalter (19) an der Bedienkonsole des Mikrotoms und dem Notstopschalter (21) im Spulenkreis eines Relais (22). Der Antriebsmotor für den Schneideantrieb (20) liegt im Lastkreis des Relais (22, 23).

Selbstverständlich sind auch Kombinationen der Ausführungen nach Figur 6c mit einer nach Figur 6a oder 6b möglich, indem der Schalter (15) sowohl im Versorgungskreis eines Motors für den Schneideantrieb als auch im Schaltkreis für eine zusätzliche Bremse des Präparat- oder Messerschlittens geschaltet ist, so daß bei einem Öffnen des Schalters (15) sowohl der Antriebsmotor ausgestellt wird als auch zusätzlich der Schlitten in seiner aktuellen Position arretiert wird.

Bei einer Einbindung des Schalters (15) in den Schaltkreis einer Bremse und/oder eines motorischen Schneideantriebes resultiert eine wesentliche Schutzwirkung, da eine motorisch angetriebene Bewegung des Schneideantriebs und eine damit verbundene Gefährdung nur möglich ist, wenn sich der Klingenschutz in seiner Funktionsstellung befindet. In dieser Funktionsstellung sind jedoch Schnittverletzungen ausgeschlossen, da die Schneidkante des Messers für den Bedienenden überhaupt nicht zugänglich ist. Das Risiko von Schnittverletzungen am Mikrotommesser wird dadurch erheblich reduziert.

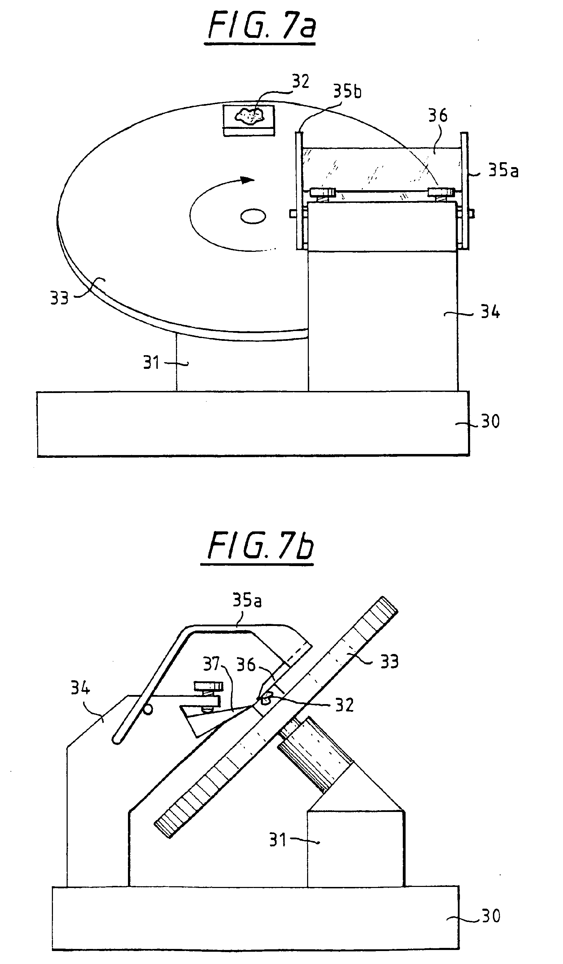

Beim Ausführungsbeispiel in Figur 7 ist der Messerhalter in Verbindung mit einem Scheibenmikrotom dargestellt. Dieses Scheibenmikrotom besteht aus einer Grundplatte (30), an der über eine Säule (31) eine zur Aufnahme der Probe (32) dienende kreisförmige Scheibe (33) angeordnet ist. Die Scheibe (33) ist über einen hier nicht dargestellten motorischen Antrieb drehbar. Weiterhin ist an der Grundplatte (30) das Basisteil (34) des Messerhalters mit dem darin aufgenommenen Messer (37) angeordnet. Der zuvor beschriebene wegschwenkbare Klingenschutz mit den Armen (35a, 35b) und der die Arme verbindenden Platte (36) ist verschwenkbar am Basisteil (34) des Messerhalters angeordnet. Auch bei einem solchen Scheibenmikrotom sind durch den erfindungsgemäßen Messerhalter Schnittverletzungen am Messer weitgehend ausgeschlossen, da über die Kopplung eines mit dem Schwenkmechanismus der Schutzeinrichtung verbundenen Schalters mit dem Antriebsmotor für die Scheibe (33) eine Drehung der Scheibe (33) nur dann möglich ist, wenn die Platte (36) sich in ihrer das Messer (37) abdeckenden Funktionsstellung befindet.

## Patentansprüche

1. Mikrotom mit einem Messerhalter mit einem Messer (3, 37), das eine Schneidekante (3a) zum Schneiden einer Probe (12, 32) entlang einer Schnittebene (14) und einen Klingenschutz aufweist,
**dadurch gekennzeichnet,**
**dass** der Klingenschutz eine Platte (11, 36) aufweist, die in ihrer Funktionsstellung zur Ausführung der Schneidarbeiten und bei der Schnittabnahme auf der Seite des Messers (3, 37) parallel zur Schnittebene (14) und mit einem ersten Spalt (d) beabstandet von der Probe (12, 32) angeordnet ist und einen weiteren Spalt (b) zwischen der Schneidekante (3a) des Messers (3, 37) und dem dieser zugewandten Rand der Platte (11, 36) bildet, dessen maximale Breite so gewählt ist, dass kein Fingerglied eines Menschen mit der Schneidkante (3a) des Messers (3, 37) in Berührung kommen kann, jedoch die Spaltbreite des weiteren Spalts (b) ausreicht, dass ein von der Probe (12, 32) abgenommener Schnitt zwischen der Platte (11, 36) und der Rückenfläche des Messers (3, 37) durch diesen Spalt (b) hindurchgleiten kann.

2. Mikrotom nach Anspruch 1,
**dadurch gekennzeichnet,**
**daß** die Platte (11) aus einem transparenten Material besteht.

3. Mikrotom nach Anspruch 1 oder 2,
**dadurch gekennzeichnet,**
**daß** die Platte (11) aus der Funktionsstellung schwenkbar oder schiebbar am Grundkörper des Messerhalters angeordnet ist.

4. Mikrotom nach Anspruch 3,
**dadurch gekennzeichnet,**
**daß** die Platte (11) mit einem Schalter (15) gekoppelt ist.

5. Mikrotom nach Anspruch 4,
**dadurch gekennzeichnet,**
**daß** der Schalter (15) mit einer Bremse (17) oder Arretiervorichtung für einen Messerschlitten oder einen Präparatschlitten (16) des Mikrotoms gekoppelt ist.

6. Mikrotom nach Anspruch 5,
**dadurch gekennzeichnet,**
**daß** ein motorischer Schneideantrieb (20) vorgesehen ist und der Schalter (15) im Stromkreis des Schneideantriebs (20) angeordnet ist.

7. Mikrotom nach Anspruch 5 oder 6,
**dadurch gekennzeichnet,**
**daß** der Schalter (15) seriell zu Schaltelementen auf einer Bedienkonsole des Mikrotoms geschaltet ist.

## Claims

1. A microtome comprising a knife holder containing a knife (3, 37), which has a cutting edge (3a) for cutting a specimen (12, 32) along a cutting plane (14), and a blade protector,
**characterized in that**
said blade protector comprises a plate (11, 36) which in the functional position thereof for carrying out the cutting operations and during slice removal is disposed to the side of said knife (3, 37) parallel to said cutting plane (14) and is set at a distance from said specimen (12, 32) by means of a first slot (d) and forms another slot (b) between said cutting edge (3a) of said knife (3, 37) and the edge of said plate (11, 36) facing said cutting edge, the maximum width thereof being such that a person's fingertips cannot come into contact with said cutting edge (3a) of said knife (3, 37), but the slot width of said other slot (b) still suffices to ensure that a slice taken from said specimen (12, 32) between said plate (11, 36) and the rear surface of said knife (3, 37) can pass through this slot (b).

2. The microtome as defined in claim 1,
**characterized in that**
said plate (11) is of a transparent material.

3. The microtome as defined in claim 1 or claim 2,
**characterized in that**
said plate (11) is disposed on the base of said knife holder and is capable of being pivoted or pushed out of the functional position.

4. The microtome as defined in claim 3,
**characterized in that**
said plate (11) is coupled with a switch (15).

5. The microtome as defined in claim 4,
**characterized in that**
said switch (15) is coupled to a brake (17) or arresting mechanism for a knife slide or a specimen slide (16) of said microtome.

6. The microtome as defined in claim 5,
**characterized in that**
a motor cutting drive (20) is provided and said switch (15) is disposed in the electrical circuit of said cutting drive (20).

7. The microtome as defined in claim 5 and claim 6,
**characterized in that**
said switch (15) is connected in series to switching elements on an operator's panel of said microtome.

## Revendications

1. Microtome avec un porte-couteau comportant une lame (3, 37) qui présente une arête de coupe (3a) pour couper un échantillon (12, 32) le long d'un plan de coupe (14) et une protection de lame, **caractérisé en ce que**
la protection de lame présente une plaque (11, 36) qui est disposée en position de fonction pour l'exécution des travaux de coupe et pour ôter la coupe sur la face du couteau (3, 37) parallèlement au plan de coupe (14) et à distance avec une première fente (d) de l'échantillon (12, 32) et forme une autre fente (b) entre l'arête de coupe (3a) du couteau (3, 37) et le bord de la plaque (11, 36) tournée vers cette dernière, fente dont la largeur maximale est sélectionnée de sorte qu'aucun phalange d'un être humain ne puisse venir en contact avec l'arête de coupe (3a) du couteau (3, 37), cependant la largeur de fente de l'autre fente (b) est suffisante pour qu'une coupe ôtée de l'échantillon (12, 32) entre la plaque (11 ,36) et la surface dorsale du couteau (3, 37) puisse glisser à travers cette fente (b).

2. Microtome selon la revendication 1, **caractérisé en ce que** la plaque (11) se compose d'un matériau transparent.

3. Microtome selon la revendication 1 ou 2, **caractérisé en ce que** la plaque (11) est disposée de manière pivotante depuis la position de fonction ou coulissante sur le corps de base du porte-couteau.

4. Microtome selon la revendication 3, **caractérisé en ce que** la plaque (11) est accouplée à un interrupteur (15).

5. Microtome selon la revendication 4, **caractérisé en ce que** l'interrupteur (15) est accouplé à un frein (17) ou un dispositif de blocage pour un chariot de couteau ou un chariot de préparation (16) du microtome.

6. Microtome selon la revendication 5, **caractérisé en ce qu'**il est prévu un entraînement de coupe motorisé (20) et que l'interrupteur (15) est disposé dans le circuit électrique de l'entraînement de coupe (20).

7. Microtome selon la revendication 5 ou 6, **caractérisé en ce que** l'interrupteur (15) est monté en série avec des éléments de commande sur une console de commande du microtome.
